# EUROPÄISCHE PATENTANMELDUNG

(11) **EP 3 431 311 A1**
(43) Veröffentlichungstag der Anmeldung: **23.01.2019**
(21) Anmeldenummer: 18183089.4
(22) Anmeldetag: 12.07.2018
(51) Int. Cl.: B60C 11/24

(54) **KONTINUIERLICHE PROFILTIEFENERKENNUNG BEI FAHRZEUGREIFEN**

(30) Priorität: 18.07.2017 DE 102017116137
(71) Anmelder: Vispiron GmbH, 80807 München (DE); Reifenhaus Bechtold GmbH, 80809 München (DE)
(72) Erfinder: BECHTOLD, Ralf, 81927 München (DE); BECHTOLD, Damaris, 80797 München (DE); ROUGHANI, Amir, 80807 München (DE); NECKER, Frank, 80333 München (DE)
(74) Vertreter: Kraus & Weisert Patentanwälte PartGmbB

(57) **Zusammenfassung**

Die vorliegende Erfindung betrifft ein Verfahren zum Umarbeiten eines Fahrzeugreifens zum Erfassen einer Profiltiefe des Fahrzeugreifens, wobei ein handelsüblicher vulkanisierter Fahrzeugreifen und mindestens ein Sensor bereitgestellt werden, wobei der Sensor separat von dem vulkanisierten Fahrzeugreifen und mit dem vulkanisierten Fahrzeugreifen verbindbar ausgebildet ist, und wobei der mindestens eine Sensor ein Trägerelement aus einem Elastomermaterial, welches unterschiedlich zu dem Material des vulkanisierten Fahrzeugreifens ist, und mindestens zwei elektrisch leitende Drähte umfasst. Weiter wird mindestens eine Durchführung in dem vulkanisierten Fahrzeugreifen erzeugt, in welcher der mindestens eine Sensor in die eingebracht und erfindungsgemäß mit dem Fahrzeugreifen verbunden wird.

## Beschreibung

Die vorliegende Erfindung betrifft eine Profiltiefenerkennung bei Fahrzeugreifen, und insbesondere ein Verfahren zum Umarbeiten eines Fahrzeugreifens zum kontinuierlichen Erkennen einer Profiltiefe des Fahrzeugreifens. Weiter werden ein zugehöriger Sensor, ein Fahrzeugreifen und ein System zum Erfassen einer Profiltiefe eines Fahrzeugreifens bereitgestellt.

Das Fahrzeugreifenprofil eines Fahrzeugreifens nutzt sich nach einer unbestimmten Zeit bzw. einer unbestimmten Fahrleistung ab und erfüllt letztendlich nicht mehr den Zweck, der dem Fahrzeugreifen in Sachen Sicherheit zugeteilt wurde. Dabei ist die Verbindung zwischen einem Kraftfahrzeug und der Straße durch den Fahrzeugreifen maßgeblich dafür, wie sicher das Fahrzeug beschleunigt und abgebremst werden kann. Insbesondere Aquaplaning kann nur durch eine ausreichende Profiltiefe der Fahrzeugreifen vermieden werden. Mindestwerte für die Profiltiefen sind wegen dieses Sicherheitsrisikos insbesondere bei Kraftfahrzeugen und motorbetriebenen Zweirädern gesetzlich vorgeschrieben, und deren Überprüfung ist fester Bestandteil gesetzlicher Sicherheitsuntersuchungen. Jedoch muss die Profiltiefe eines Fahrzeugreifens herkömmlicherweise während einer Betriebspause des Fahrzeugs vom Fahrzeugnutzer kontrolliert werden, oder das Fahrzeug muss zur Wartung zu einer Werkstatt gefahren werden, so wird die Profiltiefe meistens nur in größeren zeitlichen Abständen oder generell selten kontrolliert. Gleichzeitig sind ungleichmäßig ausgefahrene Fahrzeugreifenprofile für die Werkstatt auch ein Hinweis, die Spureinstellung des Fahrzeugs zu prüfen - und dem Fahrzeugnutzer beispielsweise eine Fahrwerkvermessung vorzuschlagen.

Es besteht daher Bedarf nach einem verbesserten Verfahren für das Erfassen einer Profiltiefe eines Fahrzeugreifens, wodurch ermöglicht wird, auf einfache und effiziente Weise eine Profiltiefe eines Fahrzeugreifens während des Betriebs eines Fahrzeugs, insbesondere außerhalb von Werkstätten, zu erfassen.

Diese Aufgabe wird mit den Merkmalen der unabhängigen Ansprüche gelöst. In den abhängigen Ansprüchen sind weitere Ausführungsformen der Erfindung beschrieben.

Gemäß einem ersten Aspekt wird ein Verfahren zum Umarbeiten eines Fahrzeugreifens zum Erfassen einer Profiltiefe des Fahrzeugreifens bereitgestellt. In einem ersten Schritt des Verfahrens wird ein vulkanisierter Fahrzeugreifen bereitgestellt. Der vulkanisierte Fahrzeugreifen ist ein gebrauchsfertiger, handelsüblicher Fahrzeugreifen, welcher nach einem Verfahrensschritt, welcher ein Backen umfasst, vollständig ausgeformt ist. In einem weiteren Schritt wird mindestens ein Sensor bereitgestellt, wobei der mindestens eine Sensor ein Trägerelement aus einem Elastomermaterial, welches unterschiedlich zu einem Elastomermaterial des vulkanisierten Fahrzeugreifens ist, und mindestens zwei elektrisch leitende Drähte umfasst. Dabei befinden sich die mindestens zwei elektrisch leitenden Drähte in unterschiedlichen vorgegebenen Profiltiefen zu einer Oberseite des Trägerelements in dem Trägerelement und werden durchtrennt, wenn die Oberseite des Trägerelements im Fahrbetrieb weiter als die entsprechende vorgegebene Profiltiefe abgetragen wird. Weiter ist der Sensor separat von dem vulkanisierten Fahrzeugreifen und mit dem vulkanisierten Fahrzeugreifen verbindbar ausgebildet. In einem weiteren Schritt wird mindestens eine Durchführung in dem vulkanisierten Fahrzeugreifen erzeugt. In einem zusätzlichen Schritt wird der mindestens eine Sensor in die mindestens eine Durchführung des Fahrzeugreifens eingebracht.

Damit wird ein verbessertes Verfahren zum Umarbeiten eines Fahrzeugreifens zum Erfassen einer Profiltiefe des Fahrzeugreifens bereitbestellt, wobei die Profiltiefe auf einfache und effiziente Weise während des Betriebs des Fahrzeugs, insbesondere außerhalb von Werkstätten oder anderen Wartungs- oder Servicepunkten, erfasst werden kann. Weiter kann die Profiltiefe während des Betriebs durchgehend oder kontinuierlich erfasst werden, wodurch genauere Vorhersagen bezüglich der Abnutzung des Fahrzeugreifenprofils getroffen werden können. Insbesondere können dadurch verbesserte Kilometer-Verträge, in denen beispielsweise die Wartung der Fahrzeugreifen Vertragsbestandteil ist, angeboten werden. Weiter weist das erfindungsgemäße Verfahren eine höhere Zuverlässigkeit, eine geringere Fehleranfälligkeit und eine erhöhte Messgenauigkeit im Vergleich bei einem Erfassen einer Profiltiefe eines Fahrzeugreifens auf.

Das Elastomermaterial des Trägerelements kann weicher sein als ein Elastomermaterial des vulkanisierten Fahrzeugreifens. Durch das weichere Elastomermaterial wird die Abnutzung des Trägerelements zuverlässiger bestimmt, und die Fehleranfälligkeit des Verfahrens wird verringert.

Das Trägerelement kann eine zylindrische Form oder eine konische Form aufweisen, insbesondere können die Ober- und Unterseite des Trägerelements jeweils eine unterschiedliche konische Form aufweisen. Die zylindrische oder konische Form des Trägerelements erlaubt ein zuverlässiges und einfaches Einbringen des Trägerelements in die Durchführung des Fahrzeugreifens.

Der Sensor kann mit einem zweiten vulkanisierbaren Gummimaterial ummantelt sein, welches eine unterschiedliche Härte zu dem Elastomermaterial des Trägerelements aufweist. Durch die Ummantelung mit einem Gummimaterial unterschiedliche Härte wird die mechanische Belastung des Sensors im Fahrbetrieb, und somit die Fehleranfälligkeit der Profiltiefenerkennung verringert.

Der Sensor kann in im Wesentlichen paralleler Richtung zur Oberseite eine maximale Abmessung von 3 cm, vorzugsweise 1 cm, und besonders vorzugsweise 0,5 cm aufweisen. Durch die derart bestimmte maximale Abmessung wird ein besonders guter Kompromiss zwischen Abrieb der Oberseite des Trägerelements und einer Stabilität des Sensors in der Durchführung des Fahrzeugreifens, und damit eine exakte Profiltiefenerkennung ermöglicht.

Das Erzeugen mindestens einer Durchführung in dem vulkanisierten Fahrzeugreifen kann ein Durchführen mindestens einer Kanalbohrung sein. Durch die Bereitstellung der Durchführung mittels einer Kanalbohrung kann der Sensor einfach und kostengünstig in dem Fahrzeugreifen befestigt werden. Insbesondere kann der Sensor in einem beliebigen handelsüblichen, bereits fertig ausgeformten, vulkanisierten Fahrzeugreifen befestigt werden.

Das Trägerelement kann in einer Durchführung innerhalb des vulkanisierten Fahrzeugreifens angebracht sein, wobei zumindest eine seitliche Fläche des Trägerelements mit dem vulkanisierten Fahrzeugreifen verbunden ist und durch den vulkanisierten Fahrzeugreifen umschlossen ist. Durch das Verbinden einer seitlichen Fläche und das Umschließen der seitlichen Fläche durch den vulkanisierten Fahrzeugreifen wird eine besonders flexible und dauerhafte Verbindung von dem Sensor zu dem Fahrzeugreifen ermöglicht, wodurch der Sensor eine geringe Fehleranfälligkeit und erhöhte Messgenauigkeit aufweist.

Das Trägerelement kann in eine Durchführung in dem Fahrzeugreifen, insbesondere in einem Elastomermaterial des Fahrzeugreifens, eingelassen sein. Durch das Einlassen des Trägerelements in dem Fahrzeugreifen wird eine besonders flexible und dauerhafte Verbindung zwischen dem Trägerelement und dem Elastomermaterial erreicht, wodurch die Zuverlässigkeit der Profiltiefenerkennung erhöht wird.

Das Trägerelement kann mittels eines Vulkanisierungsprozesses mit dem Fahrzeugreifen verbunden werden. Ein Vulkanisierungsprozess ermöglicht eine besonders einfache und schnelle Verbindung des Trägerelements mit hoher Zuverlässigkeit. Weiter kann das Trägerelement auch mit dem Fahrzeugreifen verklebt sein. Eine Verklebung des Trägerelements mit dem Fahrzeugreifen ist eine besonders kostengünstig günstige und schnelle Verbindung.

Das Trägerelement kann derart mit dem Fahrzeugreifen verbunden sein, dass die Oberseite des Trägerelements plan mit einer Lauffläche des Fahrzeugreifens abschließt. Die Lauffläche des Fahrzeugreifens entspricht dabei einer radial nach außen gelegenen Außenfläche des Fahrzeugreifens, welche im Fahrbetrieb eines Fahrzeugs mit einem Untergrund in Berührung kommt. Das Trägerelement kann auch derart angeordnet sein dass es in einem Profilelement des Fahrzeugreifens angeordnet ist, und mit der Lauffläche des Profilelements plan abschließt. Das plane Abschließen des Trägerelements mit einer Lauffläche des Fahrzeugreifens oder eines Profilelements des Fahrzeugreifens ermöglicht eine exakte Bestimmung der Profiltiefe des Fahrzeugreifens.

Mindestens zwei Sensoren können mit dem Fahrzeugreifen verbunden sein, wobei die mindestens zwei Sensoren in axialer Richtung relativ zueinander versetzt angeordnet sind. Die versetzte Anordnung der Sensoren ermöglicht ein Messen der Profiltiefe des Fahrzeugreifens an unterschiedlichen Stellen, insbesondere im Zentrum der Lauffläche und am Rand der Lauffläche des Fahrzeugreifens. Dadurch kann eine unregelmäßige Abnutzung des Fahrzeugreifens detektiert werden, was im Betrieb des Fahrzeugs auf weitere Störungen des Fahrzeuges hinweisen kann.

Die mindestens zwei Sensoren können entlang der Lauffläche gleichmäßig voneinander beabstandet sein. Indem die mindestens zwei Sensoren entlang der Lauffläche gleichmäßig voneinander beabstandet sind, kann die Profiltiefe des Fahrzeugreifens mit einer vergrößerten Messgenauigkeit und verringerten Fehleranfälligkeit bestimmt werden.

Die mindestens zwei Sensoren können in Bezug auf die Drehachse des Fahrzeugreifens in gegenüberliegenden Paaren angeordnet sein. Die Anordnung in gegenüberliegenden Paaren verringert die Fehleranfälligkeit des Verfahrens zum Messen einer Profiltiefe.

Gemäß einem weiteren Aspekt der Erfindung wird ein Sensor zum Erfassen einer Profiltiefe eines Fahrzeugreifens bereitgestellt. Der Sensor umfasst ein Trägerelement aus einem Elastomermaterial, und mindestens zwei elektrisch leitende Drähte, welche sich in unterschiedlichen vorgegebenen Profiltiefen zu einer Oberseite des Trägerelements in dem Trägerelement befinden, wobei die mindestens zwei elektrisch leitenden Drähte durchtrennt werden, wenn die Oberseite des Trägerelements im Fahrbetrieb weiter als die entsprechende vorgegebene Profiltiefe abgetragen wird. Dabei ist der Sensor separat von einem vulkanisierten Fahrzeugreifen ausgebildet, sodass er in einer Durchführung des vulkanisierten Fahrzeugreifens angeordnet und mit dem vulkanisierten Fahrzeugreifen verbunden werden kann.

Das Elastomermaterial des Trägerelements kann weicher sein als ein Elastomermaterial des vulkanisierten Fahrzeugreifens, insbesondere weicher als das Elastomermaterial des Reifens, mit welchem das Elastomermaterial des Trägerelementes verbunden ist.

Das Trägerelement kann eine zylindrische Form, eine konische Form oder an der Ober- und Unterseite jeweils eine konische Form aufweisen.

Der Sensor kann mit einem zweiten vulkanisierten Gummimaterial ummantelt sein, welches eine unterschiedliche Härte zu dem Elastomermaterial aufweist.

Der Sensor kann in im Wesentlichen paralleler Richtung zur Oberseite eine maximale Abmessung von 3 cm, vorzugsweise 1 cm, und besonders vorzugsweise 0,5 cm aufweisen.

Für den Sensor zum Erfassen einer Profiltiefe eines Fahrzeugreifens gemäß den oben beschriebenen Merkmalen können technische Effekte erzielt werden, die vergleichbar sind mit den technischen Effekten, welche für das Verfahren gemäß dem ersten Aspekt obenstehend beschrieben wurden.

Gemäß einem zusätzlichen Aspekt der Erfindung wird ein Fahrzeugreifen zum Erkennen einer Profiltiefe des Fahrzeugreifens bereitgestellt, wobei der Fahrzeugreifen mit mindestens einem Sensor gemäß dem zweiten Aspekt der Erfindung verbunden ist.

Gemäß noch einem weiteren Aspekt der Erfindung wird ein System zum Erfassen einer Profiltiefe eines Fahrzeugreifens bereitgestellt wobei das System mindestens einen Sensor gemäß den oben beschriebenen Merkmalen sowie ein lokales Steuergerät umfasst, welches innerhalb eines Fahrzeugreifens angeordnet ist, und welches über elektrische Verbindungen mit dem mindestens einen Sensor verbunden ist. Dabei bezieht das lokale Steuergerät von dem mindestens einen Sensor Sensorsignale bezüglich einer Profiltiefe des Fahrzeugreifens. Weiterhin kann das lokale Steuergerät basierend auf den Sensorsignalen des mindestens einen Sensors einen Zustand des Fahrzeugreifens bestimmen. Der Zustand des Fahrzeugreifens kann eine Abnutzung des Fahrzeugreifens im Zentrum der Lauffläche und eine Abnutzung am Rand der Lauffläche umfassen. Das Fahrzeug kann weiter ein zentrales Steuergerät umfassen, welches mit dem mindestens einen lokalen Steuergerät verbunden ist. Dabei bezieht das zentrale Steuergerät die Sensorsignale bezüglich der Profiltiefe, oder den Zustands des mindestens einen Fahrzeugreifens, von dem mindestens einen lokalen Steuergerät und leitet diese an einen außerhalb des Fahrzeuges befindlichen Server weiter.

Die oben dargelegten Merkmale, die nachfolgend ausführlich beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### Kurze Beschreibung der Zeichnungen

Die Erfindung wird nachfolgend unter Bezugnahme auf die beiliegenden Zeichnungen näher erläutert.
Figur 1 zeigt schematisch einen Sensor 10 zum Erfassen einer Profiltiefe a eines Fahrzeugreifens 20 gemäß einem Ausführungsbeispiel der Erfindung.
Figur 2 zeigt schematisch einen Fahrzeugreifen 20, welcher zwei der in Figur 1 gezeigten Sensoren 10 zum Erfassen einer Profiltiefe a des Fahrzeugreifens 20 umfasst, gemäß einem Ausführungsbeispiel der Erfindung.
Figur 3 zeigt schematisch ein System zum Erfassen einer Profiltiefe a eines Fahrzeugreifens 20 gemäß einem Ausführungsbeispiel der Erfindung.
Figur 4 zeigt ein Flussdiagramm mit Schritten zur Durchführung eines Verfahrens zum Erfassen einer Profiltiefe a eines Fahrzeugreifens 20 gemäß einem Ausführungsbeispiel der Erfindung.

### Detaillierte Beschreibung

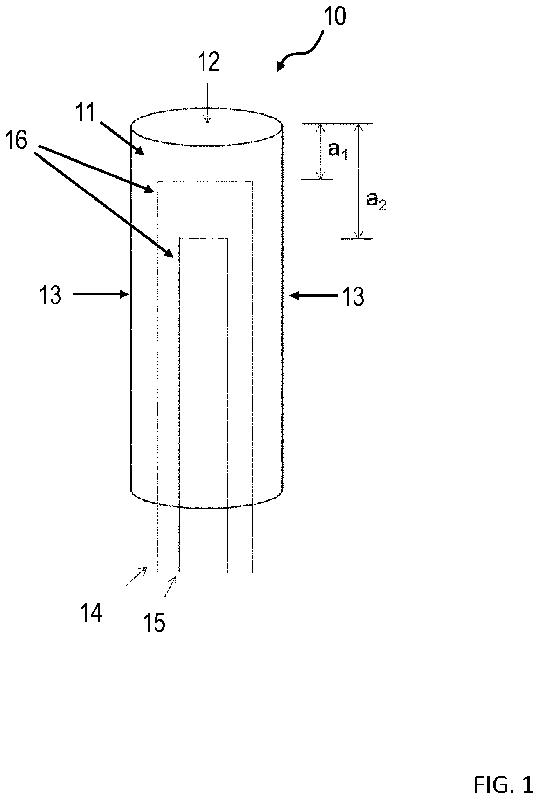

Figur 1 zeigt schematisch einen Sensor 10 zum Erfassen einer Profiltiefe a eines Fahrzeugreifens 20 gemäß einem Ausführungsbeispiel der Erfindung.

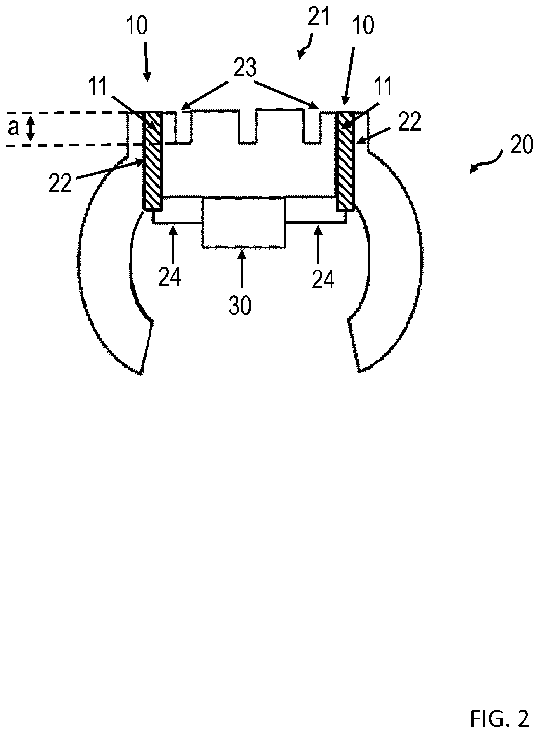

Der Sensor 10 umfasst ein Trägerelement 11, welches zylinderförmig ausgebildet ist, und welches eine Oberseite 12 und eine zylindrische seitliche Fläche 13 aufweist. Das Trägerelement 11 besteht aus einem Elastomermaterial, zum Beispiel einem formfesten, aber elastisch verformbaren Kunststoff, dessen Glasübergangspunkt sich unterhalb der Einsatztemperatur befindet. Das Elastomermaterial kann sich bei Zug- und Druckbelastung elastisch verformen, findet aber danach in seine ursprüngliche Form zurück. Elastomere finden Verwendung als Material für Fahrzeugreifen, insbesondere sind die Vulkanisate von Naturkautschuk und Silikonkautschuk Elastomere. Das Elastomermaterial ist unterschiedlich zu einem Material des vulkanisierten Fahrzeugreifens 20, welcher in Figur 2 gezeigt ist.

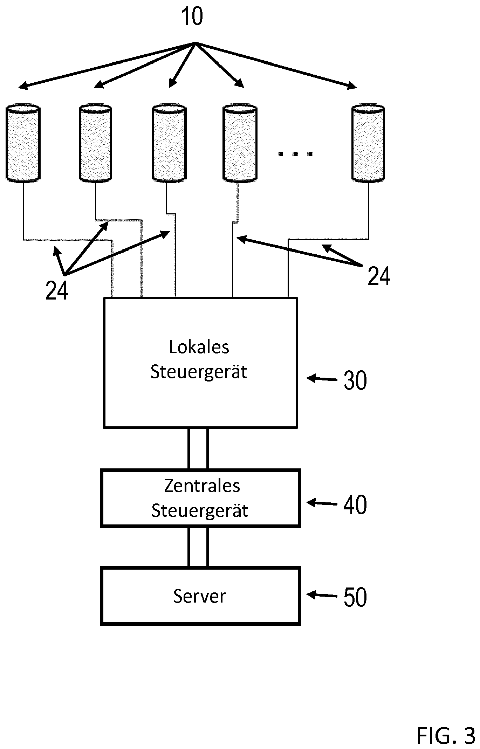

Weiter umfasst der Sensor in Figur 1 mindestens zwei elektrisch leitende Drähte 14, 15 welche sich in unterschiedlichen vorgegebenen Profiltiefen a1, a2 zu der Oberseite 12 des Trägerelements 11 in dem Trägerelement 11 befinden. Insbesondere sind die mindestens zwei elektrisch leitenden Drähte 14, 15 als elektrisch leitende Schlaufen 16 ausgeführt, welche entlang der Oberseite 12 verlaufen. Der elektrisch leitende Draht 14 verläuft dabei in einem Abstand a1, oder in anderen Worten in einer vorgegebenen Profiltiefe a1, zu der Oberseite 12 des Trägerelements 11 in dem Elastomermaterial des Trägerelements 11. Der elektrisch leitende Draht 15 verläuft dabei in einem Abstand a2, oder in anderen Worten in einer vorgegebenen Profiltiefe a2, zu der Oberseite 12 des Trägerelements 11 in dem Elastomermaterial des Trägerelements 11. Die vorgegebene Profiltiefe a1 ist dabei kleiner als die vorgegebene Profiltiefe a2, sodass, wenn das Elastomermaterial des Trägerelements 11 von der Oberseite 12 der im Fahrbetrieb eines Fahrzeuges abgetragen wird, oder in anderen Worten durch Abnutzung abgerieben wird, zuerst der elektrisch leitende Draht 14 durchtrennt wird, und wenn das Trägerelement 11 weiter abgetragen wird, danach der elektrisch leitende Draht 15 durchtrennt wird. Das Durchtrennen der elektrisch leitenden Drähte 14, 15 kann von einem Steuergerät detektiert werden, wodurch die aktuelle Profiltiefe eines Fahrzeugreifens gemessen werden kann. Der Sensor 10 ist separat von einem vulkanisierten Fahrzeugreifen 20 ausgebildet und derart ausgeformt, dass er mit einem vulkanisierten Fahrzeugreifen 20 verbunden werden kann. Ein vulkanisierter Fahrzeugreifen ist ein handelsüblicher, für den Einsatz an einem Fahrzeug bereiter Fahrzeugreifen, welcher insbesondere bereits vollständig ausgeformt ist. Die elektrisch leitenden Drähte 14, 15 sind auf der Unterseite des Trägerelementes 11 aus dem Trägerelement 11 herausgeführt, sodass sie über elektrische Verbindungen 24, gezeigt in Figur 3, mit einer Steuerelektronik verbunden werden können.

Das Trägerelement 11 kann eine zylindrische Form oder eine konische Form aufweisen, insbesondere können die Ober- und Unterseite des Trägerelements 11 jeweils eine unterschiedliche konische Form aufweisen. Andere Formen des Trägerelements 11 sind möglich, um eine zuverlässige und flexible Verbindung des Trägerelements 11 zu einem Fahrzeugreifen 20 zu ermöglichen.

Figur 2 zeigt schematisch einen Fahrzeugreifen 20, welcher zwei in Figur 1 gezeigte Sensoren 10 zum Erfassen einer Profiltiefe a des Fahrzeugreifens 20 umfasst, gemäß einem Ausführungsbeispiel der Erfindung.

Der Fahrzeugreifen 20 ist ein handelsüblicher für den Einsatz in einem Fahrzeug bereiter Fahrzeugreifen 20, welcher bereits vollständig ausgeformt, beziehungsweise vulkanisiert ist. Der Fahrzeugreifen 20 weist weiterhin eine Lauffläche 21 auf, welche in radialer Richtung zur Drehachse des Fahrzeugreifens nach außen hin gelegen ist. Zusätzlich ist in der Lauffläche 21 des Fahrzeugreifens 20 eine Vielzahl von Profilelementen 23 ausgebildet. Die Lauffläche 21 des Fahrzeugreifens 20 weist mit Bezug auf die Profilelemente 23 des Fahrzeugreifens 20 eine Profiltiefe a des Fahrzeugreifens 20 auf, welche einer Tiefe einer Rille zwischen zwei Profilelementen 23, von einer Oberseite eines Profilelementes 23 her gemessen, entspricht.

Weiter sind in dem Fahrzeugreifen 20 zwei Durchführungen 22 ausgebildet, welche von der Oberseite eines Profilelementes 23 zu einer Innenseite des Fahrzeugreifens verlaufen. Die Durchführungen 23 können als Kanalbohrungen ausgeführt sein. In jeder Durchführung 23 ist ein Sensor 10 angebracht, wobei eine seitliche Fläche 13 des Trägerelements 11 des Sensors 10 mit dem Fahrzeugreifen 20 verbunden ist und von dem Fahrzeugreifen 20 umschlossen ist. Das Trägerelement 11 kann zur Befestigung in der entsprechenden Durchführung 22 in dem Fahrzeugreifen eingelassen sein. In anderen Ausführungsbeispielen ist das Trägerelement 11 mit dem Fahrzeugreifen 20 mittels eines Vulkanisierungsprozesses oder eines Klebeprozesses verbunden. Die Oberseite 12 des Trägerelementes 11 ist dabei bündig oder plan zu einer Oberseite des entsprechenden Profilelementes 23. Auf der Innenseite des Fahrzeugreifens sind elektrische Verbindungen 24 an den Sensoren 10 angebracht.

Innerhalb des Fahrzeugreifens 20 ist ein lokales Steuergerät 30 angeordnet, welches an dem Fahrzeugreifen 20 befestigt ist. Das lokale Steuergerät 30 ist über die elektrische Verbindungen 24 mit den zwei Sensoren 10 verbunden.

Das Elastomermaterial des Trägerelements 11 kann weicher sein als ein Elastomermaterial des Fahrzeugreifens 20. In einem anderen Ausführungsbeispiel kann das Elastomermaterial des Trägerelements 11 eine andere Zusammensetzung haben als ein Elastomermaterial des Fahrzeugreifens 20, sodass das Elastomermaterial des Trägerelements 11 eine unterschiedliche Härte oder eine unterschiedliche Elastizität aufweist. Insbesondere kann der Sensor 10 mit einem zweiten vulkanisierbaren Gummimaterial ummantelt sein, welches eine unterschiedliche Härte oder Elastizität zu dem Elastomermaterial des Trägerelements 11 und dem Elastomermaterial des Fahrzeugreifens 20 aufweist. Die zwei Sensoren 10 können in axialer Richtung relativ zueinander versetzt angeordnet sein. Im Falle von einer Vielzahl von Sensoren 10 sind in einem anderen Ausführungsbeispiel die Sensoren 10 paarweise bezüglich der Drehachse des Fahrzeugreifens 20 gegenüberliegend angeordnet, und in einem anderen Ausführungsbeispiel entlang der Lauffläche gleichmäßig voneinander beabstandet.

Figur 3 zeigt schematisch ein System zum Erfassen einer Profiltiefe a eines Fahrzeugreifens 20 gemäß einem Ausführungsbeispiel der Erfindung.

Das System zum Erfassen einer Profiltiefe eines Fahrzeugreifens 20 umfasst eine Vielzahl von Sensoren 10, welche über elektrische Verbindungen 24 mit einem lokalen Steuergerät 30 verbunden sind. Das lokale Steuergerät 30 empfängt von jedem Sensor 10 Sensorsignale bezüglich einer Profiltiefe a des Fahrzeugreifens 20. In einem Ausführungsbeispiel bestimmt das lokale Steuergerät 30 aus den Sensorsignalen der Sensoren 10 einen Zustand des Fahrzeugreifens 20. Der Zustand des Fahrzeugreifens 20 kann in einem Ausführungsbeispiel eine Abnutzung des Fahrzeugreifens 20 im Zentrum der Lauffläche 21 und eine Abnutzung des Fahrzeugreifens 20 am Rand der Lauffläche 21 umfassen.

Das System zum Erfassen einer Profiltiefe eines Fahrzeugreifens umfasst weiterhin ein zentrales Steuergerät 40, welches über eine kabelgebundene oder kabellose Verbindung mit dem lokalen Steuergerät 30 kommunikativ verbunden ist. Das zentrale Steuergerät 40 empfängt von dem lokalen Steuergerät 30 Sensorsignale bezüglich einer Profiltiefe a des Fahrzeugreifens 20. In einem Ausführungsbeispiel der Erfindung empfängt das zentrale Steuergerät 40 von dem lokalen Steuergerät 30 Informationen bezüglich eines bestimmten Zustands des Fahrzeugreifens 20. In einem weiteren Ausführungsbeispiel umfasst das System zusätzlich einen Server 50, welcher entfernt von dem Fahrzeug gelegen ist der Server 50 ist über eine Funkverbindung mit dem zentralen Steuergerät 40 verbunden, wobei während des Betriebs eines Fahrzeuges Informationen bezüglich einer Profiltiefe eines Fahrzeugreifens des Fahrzeuges an den Server 50 übertragen werden.

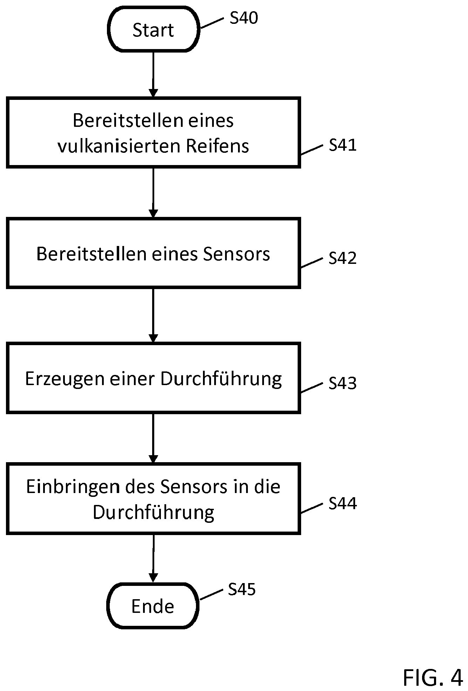

Figur 4 zeigt ein Flussdiagramm mit Schritten zur Durchführung eines Verfahrens zum Erfassen einer Profiltiefe a eines Fahrzeugreifens 20 gemäß einem Ausführungsbeispiel der Erfindung.

Das Verfahren beginnt in Schritt S40. In Schritt S41 wird ein vulkanisierter Fahrzeugreifen 20 bereitgestellt. In Schritt S42 wird mindestens ein Sensor 10 bereitgestellt, wobei der mindestens eine Sensor 10 ein Trägerelement 11 aus einem Elastomermaterial, welches unterschiedlich zu dem Material des vulkanisierten Fahrzeugreifens 20 ist, und mindestens zwei elektrisch leitende Drähte 14, 15 umfasst, welche sich in unterschiedlichen vorgegebenen Profiltiefen a1, a2 zu einer Oberseite 12 des Trägerelements 11 in dem Trägerelement 11 befinden und durchtrennt werden, wenn die Oberseite 12 des Trägerelements 11 im Fahrbetrieb weiter als die entsprechende vorgegebene Profiltiefe a1, a2 abgetragen wird, und wobei der Sensor separat von dem vulkanisierten Fahrzeugreifen 20 und mit dem vulkanisierten Fahrzeugreifen 20 verbindbar ausgebildet ist. In Schritt S43 wird mindestens eine Durchführung 23 in dem vulkanisierten Fahrzeugreifen 20 erzeugt. In Schritt S44 wird der mindestens eine Sensor 10 in die mindestens eine Durchführung 22 des Fahrzeugreifens 20 eingebracht. Das Verfahren endet in Schritt S45.

Zusammenfassend wird ein Verfahren zum Umarbeiten eines Fahrzeugreifens zum Erfassen einer Profiltiefe des Fahrzeugreifens bereitgestellt, wobei mindestens ein Sensor separat von einem vulkanisierten, gebrauchsfertigen und vollständig ausgeformten Fahrzeugreifen ausgebildet ist und erfindungsgemäß mit dem gebrauchsfertigen Fahrzeugreifen verbunden wird. Dabei wird in dem vulkanisierten Fahrzeugreifen mindestens einen Durchführung erzeugt, in welcher der mindestens eine Sensor eingebracht wird, wobei der Sensor mit dem vulkanisierten Fahrzeugreifen verbunden wird. Weiter werden ein zugehöriger Sensor, ein Fahrzeugreifen und ein System zum Erfassen einer Profiltiefe eines Fahrzeugreifens bereitgestellt.

Das erfindungsgemäße Verfahren zum Umarbeiten eines Fahrzeugreifens zum Erfassen einer Profiltiefe des Fahrzeugreifens erlaubt auf einfache und effiziente Weise während des Betriebs des Fahrzeugs, insbesondere außerhalb von Werkstätten oder anderen Wartungs- oder Servicepunkten, Informationen über eine Profiltiefe, und damit über den Abnutzungszustand des Fahrzeugreifens zu erfassen. Weiter kann die Profiltiefe eines Fahrzeugreifens während des Betriebs kontinuierlich erfasst werden, wodurch genauere Vorhersagen bezüglich der zukünftigen Abnutzung des Fahrzeugreifenprofils getroffen werden können.

### Bezugszeichenliste

- 10: Sensor
- 11: Trägerelement
- 12: Oberseite
- 13: seitliche Fläche
- 14: erster elektrisch leitender Draht
- 15: zweiter elektrisch leitender Draht
- 16: elektrisch leitende Schlaufe
- a1: erste vorgegebene Profiltiefe
- a2: zweite vorgegebene Profiltiefe

- 20: Reifen
- 21: Lauffläche des Reifens
- 22: Durchführung in dem Reifen
- 23: Profilelement des Reifens
- a: Profiltiefe des Reifens
- 24: elektrische Verbindung

- 30: lokales Steuergerät
- 40: zentrales Steuergerät
- 50: Server

- S40: Start
- S41: Bereitstellen eines vulkanisierten Reifens
- S42: Bereitstellen eines Sensors
- S43: Erzeugen einer Durchführung
- S44: Einbringen des Sensors in die Durchführung
- S45: Ende

## Patentansprüche

1. Verfahren zum Umarbeiten eines Fahrzeugreifens (20) zum Erfassen einer Profiltiefe (a) des Fahrzeugreifens (20), umfassend die folgenden Schritte:
- Bereitstellen eines vulkanisierten Fahrzeugreifens (20, S41) ;
- Bereitstellen mindestens eines Sensors (10), wobei der mindestens eine Sensor (10) ein Trägerelement (11) aus einem Elastomermaterial, welches unterschiedlich zu dem Material des vulkanisierten Fahrzeugreifens (20) ist, und mindestens zwei elektrisch leitende Drähte (14, 15) umfasst, welche sich in unterschiedlichen vorgegebenen Profiltiefen (a1, a2) zu einer Oberseite (12) des Trägerelements (11) in dem Trägerelement (11) befinden und durchtrennt werden, wenn die Oberseite (12) des Trägerelements (11) im Fahrbetrieb weiter als die entsprechende vorgegebene Profiltiefe (a1, a2) abgetragen wird, und wobei der Sensor separat von dem vulkanisierten Fahrzeugreifen (20) und mit dem vulkanisierten Fahrzeugreifen (20) verbindbar ausgebildet ist (S42);
- Erzeugen mindestens einer Durchführung in dem vulkanisierten Fahrzeugreifen (S43);
- Einbringen des mindestens einen Sensors (10) in die mindestens eine Durchführung (22) des Fahrzeugreifens (20, S44);

2. Verfahren zum Umarbeiten eines Fahrzeugreifens nach Anspruch 1, wobei das Elastomermaterial des Trägerelements (11) weicher als ein Elastomermaterial des vulkanisierten Fahrzeugreifens (20) ist.

3. Verfahren zum Umarbeiten eines Fahrzeugreifens nach einem der vorhergehenden Ansprüche, wobei der Sensor mit einem zweiten vulkanisierbaren Gummimaterial ummantelt ist, welches eine unterschiedliche Härte zu dem Elastomermaterial aufweist.

4. Verfahren zum Umarbeiten eines Fahrzeugreifens nach einem der vorhergehenden Ansprüche, wobei der Sensor in im Wesentlichen paralleler Richtung zur Oberseite eine maximale Abmessung von 3 cm, vorzugsweise 1 cm, und besonders vorzugsweise 0,5 cm aufweist.

5. Verfahren zum Umarbeiten eines Fahrzeugreifens nach einem der vorhergehenden Ansprüche, wobei das Erzeugen mindestens einer Durchführung (22) in dem vulkanisierte Fahrzeugreifen (20) ein Durchführen mindestens einer Kanalbohrung ist.

6. Verfahren zum Umarbeiten eines Fahrzeugreifens nach einem der vorhergehenden Ansprüche, wobei das Trägerelement (11) in einer Durchführung (22) innerhalb des vulkanisierten Fahrzeugreifens (20) angebracht ist, und wobei zumindest eine seitliche Fläche (13) des Trägerelements (11) mit dem vulkanisierten Fahrzeugreifen (20) verbunden und von dem vulkanisierten Fahrzeugreifen umschlossen ist.

7. Verfahren zum Umarbeiten eines Fahrzeugreifens nach einem der vorhergehenden Ansprüche, wobei das Trägerelement (11) in eine Durchführung (22) in dem Fahrzeugreifen (20) eingelassen ist.

8. Verfahren zum Umarbeiten eines Fahrzeugreifens nach einem der vorhergehenden Ansprüche, wobei das Trägerelement (11) mittels eines Vulkanisierungsprozesses mit dem Fahrzeugreifen (20) verbunden wird.

9. Verfahren zum Umarbeiten eines Fahrzeugreifens nach einem der vorhergehenden Ansprüche, wobei das Trägerelement (11) derart mit dem Fahrzeugreifen verbunden ist, dass die Oberseite (12) des Trägerelements (11) plan mit einer Lauffläche (21) des Fahrzeugreifens abschließt, wobei die Profiltiefe mittels des Sensors dadurch detektiert wird, welcher der elektrisch leitenden Drähte durch Abrieb durchtrennt wurde.

10. Verfahren zum Umarbeiten eines Fahrzeugreifens nach einem der vorhergehenden Ansprüche, wobei mindestens zwei Sensoren mit dem Fahrzeugreifen verbunden sind, wobei die mindestens zwei Sensoren (10) in axialer Richtung relativ zueinander versetzt angeordnet sind.

11. Verfahren zum Umarbeiten eines Fahrzeugreifens nach Anspruch 10, wobei die mindestens zwei Sensoren entlang der Lauffläche gleichmäßig voneinander beabstandet sind.

12. Sensor zum Erfassen einer Profiltiefe eines Fahrzeugreifens des Fahrzeugreifens, wobei der Sensor (10) folgende Elemente umfasst:
- ein Trägerelement (11) aus einem Elastomermaterial;
- mindestens zwei elektrisch leitende Drähte (14, 15), welche sich in unterschiedlichen vorgegebenen Profiltiefen (a1, a2) zu einer Oberseite (12) des Trägerelements (11) in dem Trägerelement (11) befinden, wobei die mindestens zwei elektrisch leitenden Drähte (14, 15) durchtrennt werden, wenn die Oberseite (12) des Trägerelements (11) im Fahrbetrieb weiter als die entsprechende vorgegebene Profiltiefe (a1, a2) abgetragen wird;
wobei der Sensor separat von einem vulkanisierten Fahrzeugreifen (20) ausgebildet ist, sodass er in einer Durchführung (22) des vulkanisierten Fahrzeugreifens (20) angeordnet und mit dem vulkanisierten Fahrzeugreifen (20) verbunden werden kann.

13. Sensor nach Anspruch 12, der mit einem Verfahren nach einem der Ansprüche 1-11 hergestellt wurde.

14. Reifen des Fahrzeugreifens, wobei der Fahrzeugreifen (20) mit mindestens einem Sensor (10) nach Anspruch 12 oder 13 verbunden ist.

15. System zum Erfassen einer Profiltiefe eines Fahrzeugreifens, wobei die Vorrichtung folgende Elemente umfasst:
- mindestens einen Sensor (10) nach Anspruch 12 oder 13;
- ein lokales Steuergerät (30), welches innerhalb eines Fahrzeugreifens (20) angeordnet ist, und welches über elektrische Verbindungen (24) mit dem mindestens einen Sensor (10) verbunden ist;
wobei das lokale Steuergerät (30) von dem mindestens einen Sensor (10) Sensorsignale bezüglich einer Profiltiefe (a) des Fahrzeugreifens (20) bezieht.

16. Fahrzeug umfassend mindestens ein System zum Erfassen einer Profiltiefe (a) eines Fahrzeugreifens nach Anspruch 15, weiter umfassend:
- ein zentrales Steuergerät (40), welches mit dem mindestens einen lokalen Steuergerät (30) verbunden ist;
wobei das zentrale Steuergerät (40) die Sensorsignale bezüglich der Profiltiefe (a), oder den Zustands des mindestens einen Fahrzeugreifens (20), von dem mindestens einen lokalen Steuergerät (30) bezieht und an einen außerhalb des Fahrzeuges befindlichen Server (50) weiterleitet.
